# EUROPEAN PATENT SPECIFICATION

(11) **EP 1 295 823 B1**
(45) Date of publication and mention of the grant of the patent: **05.04.2006**
(21) Application number: 02010529.2
(22) Date of filing: 10.05.2002
(51) Int. Cl.: B65G 59/04, B65G 21/20

(54) **Arrangement for destacking/stacking of fabricated items**
Anordnung zum Stapeln oder Abstapeln von hergestellten Artikeln
Agencement pour empiler ou désempiler des articles manufacturés

(30) Priority: 17.05.2001 DK 200100793
(43) Date of publication of application: 26.03.2003
(73) Proprietor: Fredsoe ApS, 7752 Snedsted (DK)
(72) Inventor: Fredsoe, Henrik Holm, 7752 Snedsted (DK)
(74) Representative: Tellefsen, Jens J.

(56) References cited:
- DE-A- 1 756 949
- DE-A- 3 343 811
- DE-A- 19 961 986
- DE-A- 19 963 461
- DE-C- 969 938
- US-A- 3 476 241
- US-A- 3 708 058
- US-A- 3 737 034
- US-A- 4 645 069
- US-A- 6 158 573

## Description

The present invention relates to a belt laying/destacking arrangement for high-speed destacking/laying of items arranged in layers, for example on a pallet, for example to use in the wood industry, including particularly the furniture making industry. The invention moreover relates to high-speed and continuous destacking/laying of items, which items are arranged in layers, for example on a pallet.

When furniture is produced industrially in modem industry, this is performed at a high speed and in large numbers. In order to obtain a rational production process, a large number of identical items are produced in large amounts. The modem machines for processing wood items can process a large number of items per unit of time, why it is necessary to be able to introduce items to the processing machines at a still increasing tempo. In order to obtain a rational manufacturing schedule, items are typically stacked in layers on pallets, which then can be moved around to the different manufacturing processes in the production hall with a lift truck. Here there is a need to destack the items from the pallet quickly and bring them forward to the processing tool in the process step, and after the process step bring them back on a pallet again or further to yet another manufacturing process.

It is known to move the items from a pallet to a process step in that a layer of items are gripped mechanically by a robot arm which then turns around and arranges them in the feeding opening in the processing tool, or alternatively after having caught the items goes from the pallet to the feeding opening. After having delivered a layer of items to the processing tools or alternatively on to a conveyor belt, the arm turns/goes back and grips the following layer of items on the pallet. Thus, a movement back and forth emerges, where the arm goes one way full of items, while returning empty.

A prior art device is known from DE-A-969938 wherein a transfer device is described. The device does, by means of a rotating perforated belt, suck up items placed by means of a furhter conveyor in the suction zone of the device, and transfer these to a second position. The perforated belt is supported by rollers such that substantial deformation of the transport path is avoided. The device is provided with two relatively large chambers wherein the air pressure is controlled by electrically controlled valves in response to a stop activated by the conveyed articles.

Thus, the object of the present invention is to provide a belt laying or destacking arrangement for high-speed destacking/laying of items arranged in layers, for example on a pallet as disclosed in claim 1. It is moreover the object of the invention to provide an arrangement where items are introduced to the manufacturing process continuously, whereby the interruption that emerges in the production when the arm turns/goes back to grip the following layer of items, is avoided.

This is obtained according to the present invention, with an arrangement of the type mentioned in the beginning, which is distinct in that it comprises one or more cooperating conveyors, which conveyors are made up a body divided into two or more chambers, where the pressure in each chamber can vary independently from underpressure to atmospheric pressure, alternatively pressure over that of the atmosphere; that each chamber on the underside is provided with holes; that a conveyor belt can rotate in longitudinal direction about the body, which conveyor belt is made up of an internal belt and an external yielding belt attached to the internal belt and that through holes are arranged in the conveyor belt; and that means for changing the pressure in each chamber are arranged.

The method according to the invention is defined by claim 7 and is distinct by high-speed and continuous destacking/laying of items, which items are arranged in layers, for example on a pallet, comprising at least one conveyor belt wherein one or more through holes are arranged, which holes can be arranged in a position where there is communication through the holes to one or more chambers, in which underpressure, atmospheric pressure or alternatively pressure over that of the atmosphere can be created optionally, whereby the method comprises the following steps:
a) The items are brought in contact with the conveyor belt and an entire layer of items are sucked on to the conveyor belt by underpressure being created in the first chamber.
b) The belt rotation implies that the items are brought into a laying position opposite a second chamber:
c) When the items are in a laying position the pressure is briefly changed in the chamber, which is opposite the laying position, to atmospheric pressure or alternatively pressure over that of the atmosphere, whereby the items are freed from the conveyor belt and passed on to a second conveyor belt or alternatively a further manufacturing process:
d) When the conveyor belt has continued with items in step b) and the destacking zone is free, a new layer of items are sucked to the conveyor belt, so that the underside of the conveyor belt is continuously filled with items.

By providing a device comprising one or more conveyors, each made up of a body split into two chambers about which a conveyor belt is rotating, which is made up of an internal belt and an external yielding belt fastened to the internal belt, it is obtained that almost continuously items can be sucked on to the underside of the belt, which is moved from the sucking zone by rotation, whereby there is room for a new layer of items on the belt. As the belt rotates continuously, a largely continuous destacking of items from the stack of items will thus occur.

The conveyor itself is made up of a body, normally made of steel, consisting of an external steel casing about which the belt rotates. Inside the body is arranged a row of internal chambers, which are separated in such a way that different pressure can be created in the chambers. At the underside of each chamber a row of holes or alternatively a slot is arranged in order to be able to convey the underpressure or the pressure over that of the atmosphere in the chamber, respectively, through corresponding holes in body and in the belt to the items. Hereby an item or a layer of items, which come in contact with the underside of the conveyor belt due to the underpressure in the chamber, are sucked on to the underside of the conveyor belt. By the rotation of the belt, a sucked layer is lead with the belt forward along the underside of the body, and in the laying position sensors will detect that now there is a new layer of items which must be released from the belt, and thereby the pressure in the chamber outside the laying position will be changed briefly.

By laying position is understood the place on the conveyor belt where the items, which have been destacked, can be released from the conveyor belt by a brief change in pressure in one chamber in order to be stacked either in the following manufacturing process or in a second conveyor belt, which is to convey the items in the production process. Correspondingly, by destacking zone is understood the part of the conveyor belt where the items are sucked from the pallet with items stacked in layers.

The rotating conveyor belt itself is constructed as a traditional conveyor belt to which an elastic or yielding layer, for example in the shape of a cellular rubber, is glued or attached to in another way. The conveyor belt itself is typically a reinforced synthetic material belt. In the sides, part of the belt is milled out in such a way that when the belt is running along the underside of the casing, the thinner part, which is the outermost part of the belt, is running inside the casing on some projections.

Between the chamber with underpressure, atmospheric pressure or pressure over that of the atmosphere and the back side of the conveyor belt a friction reducing layer is arranged, for example in the shape of a nylon layer. A corresponding layer can be arranged anywhere where the conveyor belt touches the body.

It is essential for the invention that the pressure inside the chambers can be conveyed to the items, whether it concerns underpressure, atmospheric pressure or pressure over that of the atmosphere, holes are to be arranged in the chamber wall and the back side of the conveyor belt and through the conveyor belt, both the reinforced synthetic material part provided and the yielding glued on layer, for example the cellular rubber. Hereby it is ensured that an underpressure in the chamber will be transmitted to the item, which will be sucked on to the conveyor belt. The underpressure is to be so strong that the item can securely be held to the conveyor belt. The yielding layer, for example in the shape of cellular rubber will, when an item is sucked on, be a little bit compressed, which implies an improved sealing about the item and the conveyor belt. The compression of the yielding layer, for example cellular rubber therefore works as a type of sealing packing about the sucked items. By changing the pressure in the chamber briefly opposite the laying zone to atmospheric pressure or pressure over that of the atmosphere, the items are freed, where after they are conveyed further on in the process by a further provided conveyor belt.

The distance between individual holes in the conveyor belt are to be adjusted so that there is a hole, alternatively a slot above each item in the destacking zone.

In order for the conveyor belt to suck on the items from the stack of items in layers on, for example a pallet, the distance between the upper layer and the conveyor belt has to be so small, that the underpressure in the chamber in the sucking zone is great enough to suck the items up and hold them on the belt. Therefore, it must be ensured, that as the layers are conveyed further in the manufacturing process and the distance between the conveyor belt and the upper layer therefore varies, that a mechanism compensating for this distance is arranged. This can be performed if a conveyor belt is lowered continuously concurrently an item layer being removed from the stack on the pallet. Alternatively, a lifting device can be arranged, for example a lifting table under the pallet, whereby the lifting table, concurrently with a layer from the top of the stack on the pallet is removed, lifts the pallet to the correct distance in relation to the conveyor belt. Hereby it is obtained with both methods that the items are continuously brought to the correct position in order to be sucked against the conveyor belt and brought further on in the production process. This part of the arrangement is controlled, for example by a control unit connected with a row of sensors, whereby the pallet's lifting tempo or the lowering of the conveyor belt are adjusted to the destacking speed.

The conveyor belt laying/destacking arrangement comprises one or more laterally arranged conveyor belts. By arranging an fixed conveyor belt along a process reference line, it is obtained that independently of the size of the items there is always a fixed reference point in the production line. Therefore, the conveyor belts arranged side by side can be arranged with variable distance to the fixed conveyor belt, depending on the size of the items. This means that when handling long items, there has to be a greater distance between the two conveyor belts arranged side by side, whereas when handling small items, the fixed belt can perform the destacking and belt laying alone.

Hereafter the invention will be explained in detail now with reference to the schematic drawing enclosed where:
- Fig. 1: shows a side view of an arrangement according to the invention,
- Fig. 2 a: shows a typical section through a conveyor according to the invention,

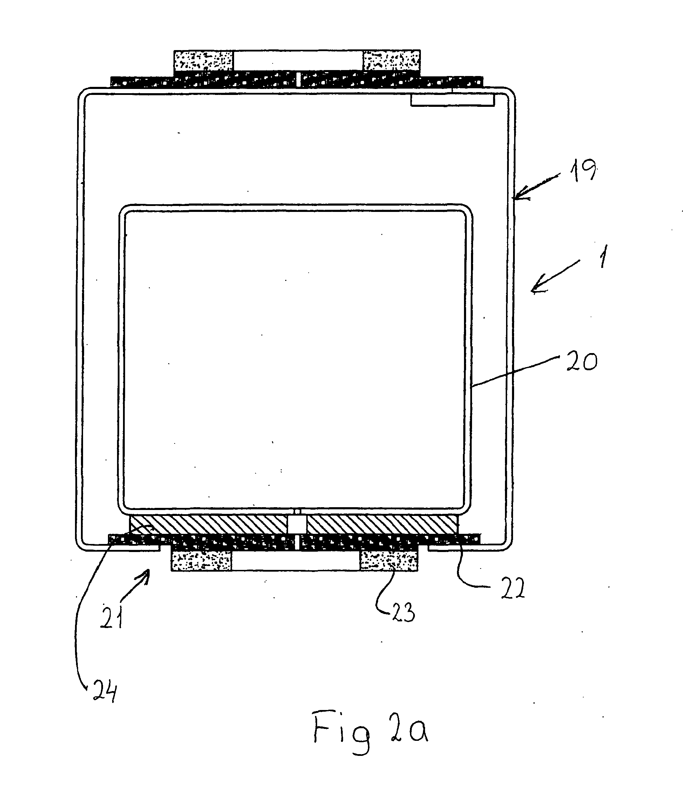

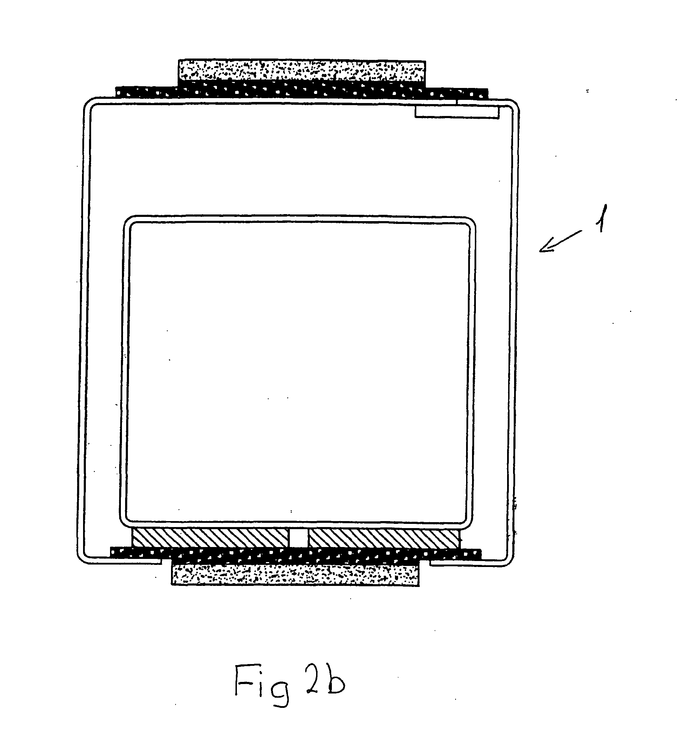

- Fig. 2 b: shows another typical section through the conveyor,

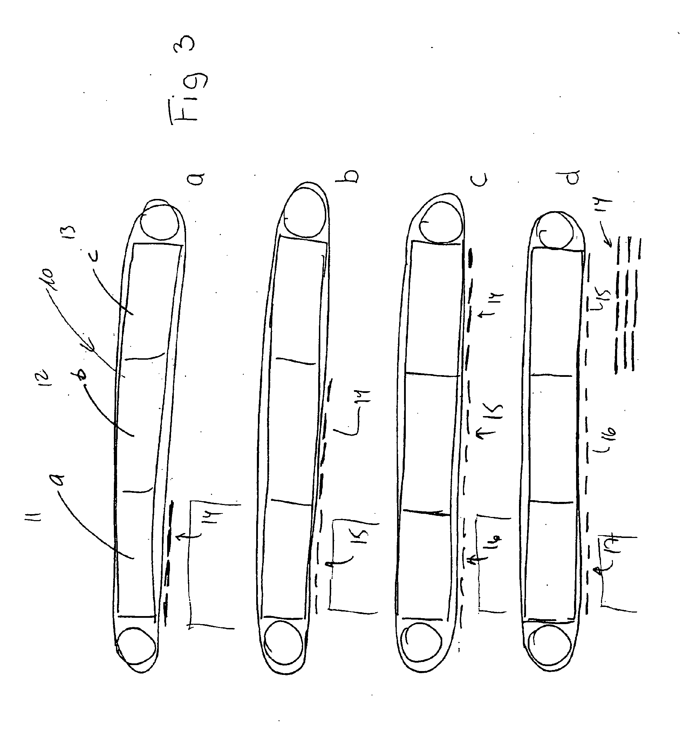

- Fig. 3: shows the principle in belt destacking/laying according to the invention

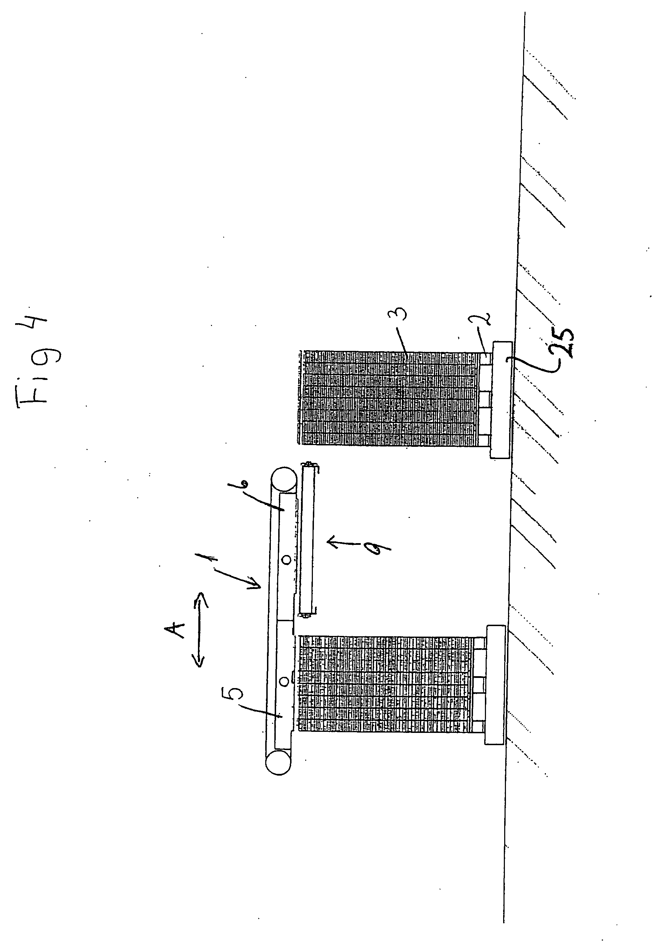

- Fig. 4: shows the principle of feeding items to the conveyor belt according to the invention.

In the different Figures of the drawing, identical or corresponding items are provided with the same designations, therefore no explanation in connection with each individual Figure is provided.

In the drawing, certain elements such as sensors, connecting wires, cables, control units and other elements that are necessary for a functioning arrangement, are omitted out of consideration to clarity.

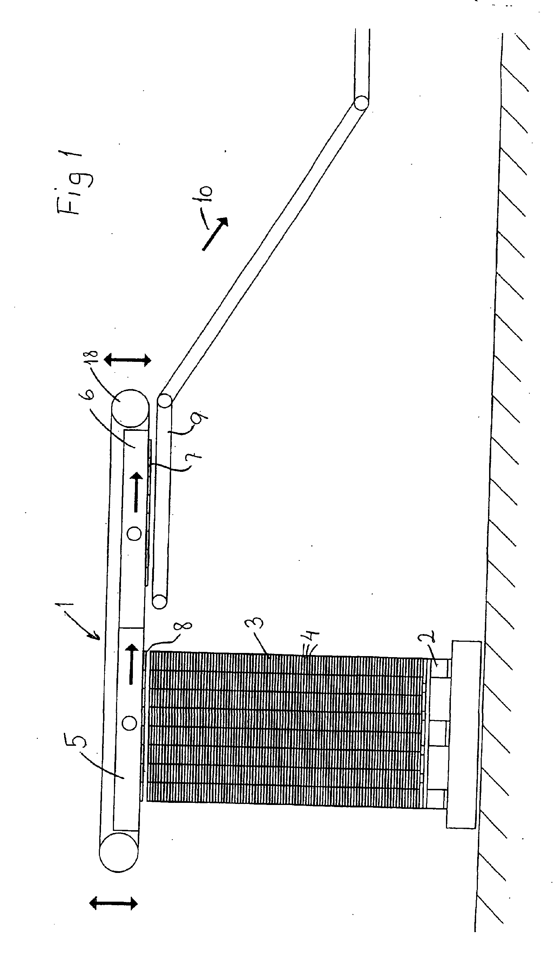

In Fig. 1 is illustrated an arrangement according to the invention, where a conveyor 1 is arranged above a pallet 2, on which a row of items 3 are stacked in layers 4. A first chamber 5 is illustrated as destacking zone and in this embodiment, the conveyor is illustrated with two chambers, wherein the laying chamber 6 is shown at the opposite end of the destacking zone 6. Depending on the arrangement, an optional number of chambers can be arranged between the destacking and laying zones.

A first layer 7 of items 3 is provided for the laying zone, where there are still no changes in the pressure in the chamber 5. A second layer 8 of items 3 is sucked on in the destacking zone and transport towards laying zone 6 has commenced.

At this stage in the process there is underpressure in both chambers 5, 6. By changing the pressure in chamber 6 briefly from underpressure to atmospheric pressure, alternative pressure over that of the atmosphere, the first layer 7 of items 3 will be freed and fall down on the conveyor 9 in order to be brought further in the process, as illustrated by the arrow 10. After the brief change of pressure, there will be underpressure in chamber 6 again, where after the second layer 8 of items 3 will have reached laying zone 6, where after the pressure in chamber 6 will be changed again, so the second layer of items 8 is released from the conveyor belt.

This method is further illustrated in Figure 3, where a conveyor with three chambers is illustrated. Similarly to the conveyor in Figure 1, the conveyor with the three chambers 11, 12, 13 is arranged in such a way that a first chamber 11 forms the destacking zone and in this case, a third chamber 13 forms the laying zone. In Figure 3a a first layer of items 14 has just been sucked on in the destacking zone 11. At the present time there is an underpressure in all three chambers 11, 12, and 13.

In Figure 3b the first layer of items 14 has been conveyed to a position opposite to the second chamber 12, simultaneously with a new layer of items 15 has been sucked on in the destacking zone 11.

In Figure 3c the first layer of items 14 has reached the laying zone 13, simultaneously with the second layer of elements 15 has reached the chamber 12, simultaneously with the third layer of elements 16 has just been sucked to the conveyor belt opposite the destacking zone in chamber 11.

In Figure 3d there is, after the pressure in chamber 13 briefly has been changed from underpressure to either atmospheric pressure or alternative pressure over that of the atmosphere, whereby the first layer of items has been released from the conveyor belt, and in this illustration arranged on top of a new stack of items, made room for a second layer 15, which has reached the laying zone simultaneously with the third layer 16 has been conveyed to the middle chamber 12 and a fourth layer of items 17 has been sucked on. As illustrated in Figure 3, this process of sucking on items goes on opposite to the destacking zone at chamber 11 and of conveying past different chambers, in this case three chambers, to the laying zone outside chamber 13 continuously, whereby the underside of the conveyor belt 10 is always full of elements.

With items that are stacked as described above, it will be necessary to regulate the distance between the upper layer and the underside of the conveyor belt in the same tempo in order to keep constant the distance between the destacking zone on the conveyor belt and the upper side of the upper layer of items on the pallet. This can be done either by regulating the height of the conveyor belt in relation to the layers, for example where the layers of items stacked on a pallet are arranged on a stationary base. Alternatively, the conveyor belt can be held at a constant height, whereas the pallet with the items stacked in layers is arranged on a lifting device, for example in the shape of a lifting table which brings the items up at a correct distance in relation to the destacking zone. This is prior art and will therefore not be described in more detail.

In Figure 1 drive means and rollers are also illustrated. These are prior art and will therefore not be described in more detail.

In Figure 2 are shown typical cross sections through the conveyor part of the belt laying or destacking arrangement according to the invention. The conveyor part is made up of a body 19, normally made of steel. Inside the body one or more chambers 20 are arranged, wherein underpressure, atmospheric pressure or pressure over that of the atmosphere, respectively, may be created. The conveyor belt 21 is arranged so that at the underside it runs with a flange inside body 19, and the belt is constructed in such a way that part of the belt and the yielding glued on belt, for example the cellular rubber 23, projects out of the body's lower part. When the belt returns empty, this occurs at the upper side of body. The conveyor belt is, as mentioned above, constructed of two parts. The first part 22 is a traditional conveyor belt built up of a reinforced synthetic matrix. On the reinforced conveyor belt matrix a yielding material is attached, for example a cellular rubber 23, so that the layers together 22, 23 make up the conveyor belt 21. In Figure 2a the section through the conveyor belt arrangement is made so that the body is sectioned through in a situation where the holes at the bottom of a chamber, wherein there is an underpressure, is arranged opposite a corresponding hole in the conveyor belt and a larger opening in the cellular rubber. In this position there will also be suction in the cellular rubber due to the underpressure in the chamber, and as the cellular rubber comes in contact with an item, it will suck the item and hold it until the pressure in the chamber is changed as described above.

In order to reduce the friction between the chambers with underpressure and the conveyor belt a friction reducing layer 24 is mounted at the underside of the chamber and the conveyor belt. As material for this friction reducing layer one can choose a synthetic material, for example polyurethane.

In Figure 2b the section through the conveyer device is made at a spot, where no connecting holes exist between the chamber and the sucking surface on the conveyor belt. Similarly no holes are shown on the conveyor belt.

When the belt laying or destacking arrangement according to the invention runs optimally, the belt has a speed of 180 m per minute, corresponding to the fact that about 20 layers can be destacked from a pallet per minute.

In order to ensure continuous feeding of items stacked in layers, for example on pallets, the conveyor 1 is arranged with a pallet feeder device, so when a pallet has been emptied for items stacked in layers, this one is very quickly removed and a new pallet is brought into position under the destacking zone opposite the first chamber, for example chamber 5, 11.

In Figure 4 is shown an alternative arrangement according to the invention, where at both sides of a conveyor belt 9 for conveying items to a further step in the process, pallets are arranged with items stacked in layers to be destacked. In the example shown, the items 3 are stacked on pallets 2, which pallets are arranged on lift tables 25.

In the arrangement shown, the conveyor device is arranged with two chambers 5, 6 and the destacking chamber 5, and thereby the destacking zone is opposite the pallet with the items stacked in layers at the left side of the conveyor belt 9. As the items 3 are destacked in layers from the left side concurrently with the lifting table brings the pallet closer to the destacking zone 5, a new pallet full of elements 3 stacked in layers is placed at the right side of the further conveyor belt 9. When all the items from the left side have been destacked, the conveyor 1 is displaced, so that the chamber 6 is conveyed to a position above the recently conveyed items stacked at the right side of the further conveyor belt 9. During the displacement of the conveyor 1 from having the destacking zone opposite the chamber 5 to now having the destacking zone opposite chamber 6, the direction of rotation on the conveyor belt is turned, just as the automatics provides for the necessary changes in pressure being performed in the chambers 5, 6 as described elsewhere. While the conveyor belt destacks the items from the right side of the further conveyor belt, the now empty pallet on the left side is removed and replaced with a new one filled with items stacked in layers.

In this way, items are conveyed continuously and very quickly to the destacking device, whereby a more or less contunious belt destacking and laying process is provided. Typically the changing time from the one side of the belt to the second side of the belt is around 10 seconds.

Thus, in this way a belt laying or destacking arrangement is constructed, which largely continuously, i.e. with very short disruptions in the feeding of items, namely only the disruptions that are needed in order to bring the succeeding layer in contact with the destacking zone opposite chamber 5, destacks the items stacked in layers and advances them in the process via the conveyor device 1 and the further conveyors 9 arranged for that purpose or further manufacturing process plant.

## Claims

1. Belt laying or destacking arrangement for high-speed destacking/laying of items arranged in layers, for example on a pallet, for example for use in the wood industry, including particularly the furniture construction industry, where it comprises one or more cooperating conveyors (1), which conveyors (1) are made up of a body (19) and a conveyor belt (21) which can be rotated in longitudinal direction about the body (19) inside which two or more chambers (5,6) are arranged, wherein the pressure can vary independently in each chamber (5,6) from underpressure to atmospheric pressure, alternatively pressure over that of the atmosphere, and means for changing the pressure independently are arranged in each chamber (5,6); each chamber (5,6) at the underside is supplied with holes, and through holes are arranged in the conveyor belt (21);
**characterised in that** the conveyor belt (21) is made up of an internal belt (22) and an external yielding belt (23) attached to the internal belt (22); **in that** between the conveyor belt (21) and the body (19), a friction reducing layer (24) is disposed; and **in that** at least an outer part of the internal belt (22) at the underside of the conveyor (1) is arranged inside the body (19) of the conveyor (1).

2. Belt laying or destacking arrangement according to claim 1, **characterised in that** the conveyor belt (21) runs with a speed from 90 m/min, to 250 m/min., more preferred 150 m/min. to 200 m/min., and most preferred 165 m/min. to 190 m/min.

3. Belt laying or destacking arrangement according to one or more of the preceding claims, **characterised in that** the arrangement comprises a pallet (2) conveying device, whereby items (3) stacked in layers (4) on pallets are conveyed continuously to the destacking conveyor belt and that a conveyor belt is arranged fixed in relation to a stationary reference line in the process line.

4. Belt laying or destacking arrangement according to claim 3, **characterised in that** one or more other conveyor belts can be arranged with variable lateral distance to the fixedly arranged conveyor belt (21).

5. Belt laying or destacking arrangement according to any preceding claim, **characterised in that** means, for example a pallet (2) loader and unloader table is arranged under the conveyor belt (21) under the destacking zone in order to convey the items (3) stacked in layers (4) into the destacking zone.

6. Belt laying or destacking arrangement according to claim 1, **characterised in that** a first chamber (5) is arranged to suck on the items from the upper layer, which zone from the conveyor belt (21) forms a destacking zone and that a second chamber (6) arranged at the opposite end of the destacking zone in the conveyor belt (21) arranged to stack, i.e. release the items from the conveyor belt (21), forms a laying zone, in which the items are conveyed to succeeding steps in the process.

7. Method of using an arrangement according to claim 1 for high-speed and continuous laying/destacking of items, which items are arranged in layers, for example on a pallet (2), comprising at least one conveyor belt (21) wherein one or more through holes are arranged, which holes can be arranged in a position where there is communication through the holes to one or more chambers (5,6), in which underpressure, atmospheric pressure or alternatively pressure over that of the atmosphere can be created optionally, whereby the method comprises the following steps:
a) The items are brought in contact with the conveyor belt (21) and an entire layer of items are sucked on to the conveyor belt (21) by underpressure being created in the first chamber.
b) The belt rotation implies that the items are brought into a laying position opposite a second chamber (6):
c) When the items are in a laying position the pressure is briefly changed in the chamber (6), which is opposite the laying position, to atmospheric pressure or alternatively pressure over that of the atmosphere, whereby the items are freed from the conveyor belt (21) and passed on to a second conveyor belt or alternatively a further manufacturing process:
d) when the conveyor belt (21) has continued with items in step b) and the destacking zone is free, a new layer of items are sucked to the conveyor belt, so that the underside of the conveyor belt is continuously filled with items.

8. Method according to claim 7, **characterised in that** a control unit is connected with a row of sensors, which detect the arrangement of the items on the belt, whereby the pressure in the chambers is regulated to underpressure, atmospheric pressure, alternative pressure over that of the atmosphere, respectively, as a function of the arrangement of the items in relation to the destacking position and laying position.

9. Method according to claim 8, **characterised in that** the control unit regulates a lifting device below the items, whereby the items are brought to destacking position as the item layers are destacked.

10. Method according to claim 8 or 9, **characterised in that** the control unit regulates a device, whereby the conveyor belt and possibly other conveyor belts are brought to destacking position in relation to the items.

11. Method according to one or more of the preceding claims 7 to 10, **characterised in that** pallet arrangement stations are provided, for example in the shape of lifting tables, systematically about a further conveyor belt, so that the destacking/laying arrangement successively can be brought to a position where it arbitrarily can destack/stack items from an optional pallet by displacement of the destacking/laying arrangement perpendicular to the further conveyor belt.

## Patentansprüche

1. Bandauflege- oder Abstapelanordnung zum Hochgeschwindigkeitsabstapeln/auflegen von in Schichten angeordneten Artikeln, beispielsweise auf eine Palette, z.B. zur Verwendung in der Holzindustrie, insbesondere der Möbelherstellungsindustrie, umfassend einen oder mehrere zusammenwirkende Fördereinrichtungen (1), wobei die Fördereinrichtungen (1) aufgebaut sind aus einem Körper (19) und einem Förderband (21), welches in Längsrichtung um den Körper (19) rotierbar ist, in welchem zwei oder mehr Kammern (5, 6) angeordnet sind, wobei der Druck in jeder Kammer (5, 6) unabhängig zwischen einem Unterdruck und einem atmosphärischem Druck, alternativ einem Druck über dem der Atmosphäre, variieren kann, und wobei Mittel zum unabhängigen Verändern des Druckes in jeder Kammer (5, 6) angeordnet sind; wobei jede Kammer (5, 6) an der Unterseite mit Löchern versehen ist und Durchgangslöcher in dem Förderband (21) vorgesehen sind; **dadurch gekennzeichnet, dass** das Förderband (21) aus einem inneren Band (22) und einem an dem inneren Band (22) befestigten äußeren nachgebenden Band (23) besteht, dass zwischen dem Förderband (21) und dem Körper (19) eine reibungsmindernde Schicht (24) angeordnet ist, und dass mindestens ein äußerer Teil des Inneren Bandes (22) an der Unterseite der Fördereinrichtung (1) innerhalb des Körpers (19) der Fördereinrichtung (1) angeordnet ist.

2. Bandauflege- oder Abstapelanordnung nach Anspruch 1, **dadurch gekennzeichnet, dass** das Förderband (21) mit einer Geschwindigkeit zwischen 90 m/min und 250 m/min läuft, bevorzugter zwischen 150 m/min und 200 m/min und am bevorzugtesten zwischen 165 m/min und 190 m/min.

3. Bandauflege- oder Abstapelanordnung nach einem oder mehreren der vorstehenden Ansprüche, **dadurch gekennzeichnet, dass** die Anordnung eine Paletten (2) fördernde Vorrichtung umfasst, wobei auf Paletten in Schichten (4) gestapelte Artikel (3) kontinuierlich zu dem Abstapelförderband befördert werden, und dass ein Förderband angeordnet ist, das gegenüber einer feststehenden Bezugslinie in der Prozesslinie fixiert ist.

4. Bandauflege- oder Abstapelanordnung nach Anspruch 3, **dadurch gekennzeichnet, dass** ein oder mehrere Förderbänder mit einem variablen Seitenabstand zu dem fixiert angeordneten Förderband (21) angeordnet sein kann/können.

5. Bandauflege- oder Abstapelanordnung nach einem der vorstehenden Ansprüche, **dadurch gekennzeichnet, dass** Mittel, z.B. ein Belade- und Entladetisch für Paletten (2) unter dem Förderband (21) unterhalb der Abstapelzone angeordnet ist, um die in Schichten (4) gestapelten Artikel (3) in die Abstapelzone zu befördern.

6. Bandauflege- oder Abstapelanordnung nach Anspruch 1, **dadurch gekennzeichnet, dass** eine erste Kammer (5) zum Ansaugen der Artikel von der oberen Schicht angeordnet ist, wobei die Zone des Förderbandes (21) eine Abstapelzone bildet, und dass eine zweite Kammer (6), die am gegenüberliegenden Ende der Abstapelzone in dem Förderband (21) zum Stapeln, d.h. zum Freigeben der Artikel von dem Förderband (21) angeordnet ist, eine Liegezone bzw. Ablagezone bildet, in der die Artikel nachfolgenden Schritten in dem Prozess zugeführt werden.

7. Verfahren zur Verwendung einer Anordnung nach Anspruch 1 zum Hochgeschwindigkeits- und kontinuierlichen Auflegen/Abstapeln von Artikeln, wobei die Artikel in Schichten, beispielsweise auf einer Palette (2), angeordnet sind, umfassend mindestens ein Förderband (21), in dem eines oder mehrere Durchgangslöcher vorgesehen sind, die in einer Position angeordnet sein können, in der eine Kommunikation durch die Löcher mit einer oder mehrere Kammern (5, 6) stattfindet, in welchen ein Unterdruck, ein atmosphärischer Druck oder alternativ ein Druck über dem der Atmosphäre beliebig erzeugt werden kann, wobei das Verfahren die folgenden Schritte umfasst:
a) Die Artikel werden mit dem Förderband (21) in Kontakt gebracht, und eine ganze Schicht mit Artikeln wird mittels in der ersten Kammer erzeugten Unterdruckes auf das Förderband (21) gesaugt;
b) Die Bandrotation führt dazu, dass die Artikel gegenüber einer zweiten Kammer (6) in eine liegende Position gebracht werden;
c) Befinden sich die Artikel in einer liegenden Position, wird der Druck in der Kammer (6), die sich gegenüber der Liegeposition befindet, kurzzeitig in einen atmosphärischen Druck oder alternativ einen Druck über dem der Atmosphäre geändert, wobei die Artikel von dem Förderband (21) freigegeben und einem zweiten Förderband oder alternativ einem weiteren Herstellungsschritt zugeführt werden;
d) Sobald das Förderband (21) mit den Artikeln in Schritt b) fortfährt und die Abstapelungszone frei ist, wird eine neue Schicht mit Artikeln auf das Förderband gesaugt, so dass die Unterseite des Förderbandes kontinuierlich mit Artikeln beschickt ist.

8. Verfahren nach Anspruch 7, **dadurch gekennzeichnet, dass** eine Steuereinheit an eine Reihe von Sensoren angeschlossen ist, die die Anordnung der Artikel auf dem Band feststellen, wobei der Druck in den Kammern je nach Anordnung der Artikel mit Bezug auf die Abstapelposition und die Liegeposition auf einen Unterdruck, einen atmosphärischen Druck, alternativ auf einen Druck über dem der Atmosphäre, geregelt wird.

9. Verfahren nach Anspruch 8, **dadurch gekennzeichnet, dass** die Steuereinheit eine Hebevorrichtung unterhalb der Artikel steuert, wobei die Artikel beim Abstapeln der Artikelschichten in eine Abstapelposition gebracht werden.

10. Verfahren nach Anspruch 8 oder 9, **dadurch gekennzeichnet, dass** die Steuereinheit eine Vorrichtung steuert, wobei das Förderband und möglicherweise weitere Förderbänder in eine Abstapelposition mit Bezug auf die Artikel gebracht werden.

11. Verfahren nach einem oder mehreren der vorstehenden Ansprüche 7 bis 10, **dadurch gekennzeichnet, dass** Palettenanordnungsstationen, beispielsweise in Form von Hebetischen, systematisch um ein weiteres Förderband vorgesehen sind, so dass die Abstapel-/Auflegeanordnung nacheinander in eine Position gebracht werden kann, in welcher sie Artikel in beliebiger Weise von einer beliebigen Palette durch Verschieben der Abstapel-/Auflegeanordnung senkrecht zu dem weiteren Förderband abstapeln/stapeln kann.

## Revendications

1. Agencement à bande de pose ou de désempilement pour désempiler/poser à haute vitesse des articles agencés en couches, par exemple sur une palette, par exemple pour une utilisation dans l'industrie du bois, incluant particulièrement l'industrie de fabrication des meubles, où il comprend un ou plusieurs transporteurs ou convoyeurs en coopération (1), lesquels transporteurs (1) sont composés d'un corps (19) et d'une bande transporteuse (21) qui peut être entraînée en rotation dans une direction longitudinale autour du corps (19) à l'intérieur duquel deux ou plusieurs chambres (5, 6) sont agencées, la pression pouvant varier indépendamment dans chaque chambre (5, 6) d'une sous-pression vers la pression atmosphérique, alternativement une pression au-dessus de celle de l'atmosphère, et des moyens pour changer la pression sont indépendamment agencés dans chaque chambre (5, 6) ; chaque chambre (5, 6) au niveau du dessous est munie de trous, et des trous traversants sont agencés dans la bande transporteuse (21),
**caractérisé en ce que** la bande transporteuse (21) est composée d'une bande interne (22) et d'une bande souple externe (23) attachée à la bande interne (22) ; **en ce que**, entre la bande transporteuse (21) et le corps (19), une couche réduisant le frottement (24) est disposée ; et **en ce qu'**au moins une partie externe de la bande interne (22) au niveau du dessous du transporteur (1) est agencée à l'intérieur du corps (19) du transporteur (1).

2. Agencement à bande de pose ou de désempilement selon la revendication 1,
**caractérisé en ce que** la bande transporteuse (21) se déplace à une vitesse de 90 m/mn à 250 m/mn, plus préférablement de 150 m/mn à 200 m/mn, et plus préférablement de 165 m/mn à 190 m/mn.

3. Agencement à bande de pose ou de désempilement selon l'une ou plusieurs des revendications précédentes,
**caractérisé en ce que** l'agencement comprend un dispositif de transport de palettes (2), grâce à quoi des articles (3) empilés en couches (4) sur des palettes sont transportés de façon continue vers la bande transporteuse de désempilement et **en ce qu'**une bande transporteuse est agencée de façon fixe en relation à une ligne de référence immobile dans la ligne du processus.

4. Agencement à bande de pose ou de désempilement selon la revendication 3,
**caractérisé en ce qu'**une ou plusieurs autres bandes transporteuses peuvent être agencées avec une distance latérale variable par rapport à la bande transporteuse (21) agencée de façon fixe.

5. Agencement à bande de pose ou de désempilement selon une quelconque revendication précédente,
**caractérisé en ce que** des moyens, par exemple une table de chargement et de déchargement de palettes (2), sont agencés sous la bande transporteuse (21) sous la zone de désempilement de façon à transférer les articles (3) empilés en couches (4) dans la zone de désempilement (6).

6. Agencement à bande de pose ou de désempilement selon la revendication 1,
**caractérisé en ce qu'**une première chambre (5) est agencée pour aspirer les articles à partir de la couche supérieure, laquelle zone de la bande transporteuse (21) forme une zone de désempilement, et **en ce qu'**une seconde chambre (6) agencée au niveau de l'extrémité opposée de la zone de désempilement dans la bande transporteuse (21) agencée pour empiler, c'est-à-dire libérer les articles de la bande transporteuse (21), forme une zone de pose, dans laquelle les articles sont transportés vers des étapes suivantes du processus.

7. Procédé pour utiliser un agencement selon la revendication 1 pour poser/désempiler en continu et à haute vitesse des articles, lesquels articles sont agencés en couches, par exemple sur une palette (2), comprenant une bande transporteuse (21) dans laquelle un ou plusieurs trous traversants sont agencés, lesquels trous peuvent être agencés dans une position où il y a communication par les trous vers une ou plusieurs chambres (5, 6), dans lesquelles une sous-pression, la pression atmosphérique ou alternativement une pression supérieure à celle de l'atmosphère peut être créée éventuellement, le procédé comprenant les étapes suivantes :
(a) les articles sont amenés en contact avec la bande transporteuse (21) et une couche totale d'articles est aspirée sur la bande transporteuse (21) par la sous-pression qui est créée dans la première chambre ;
(b) la rotation de la bande implique que les articles sont amenés dans une position de pose à l'opposé d'une seconde chambre (6) ;
(c) quand les articles sont dans une position de pose, la pression est changée brièvement dans la chambre (6) qui est opposée à la position de pose, à la pression atmosphérique ou alternativement une pression supérieure à celle de l'atmosphère, grâce à quoi les articles sont libérés de la bande transporteuse (21) et passés sur une seconde bande transporteuse ou alternativement vers un autre processus de fabrication ;
(d) quand la bande transporteuse (21) a continué avec des articles dans l'étape (b) et que la zone de désempilement est libre, une nouvelle couche d'articles est aspirée sur la bande transporteuse, de sorte que le dessous de la bande transporteuse est continuellement chargé d'articles.

8. Procédé selon la revendication 7,
**caractérisé en ce qu'**une unité de commande est reliée à une rangée de capteurs, qui détectent l'agencement des articles sur la bande, la pression dans les chambres étant réglée à une sous-pression, à la pression atmosphérique ou alternativement à une pression au-dessus de celle de l'atmosphère, respectivement, en fonction de l'agencement des articles en relation à la position de désempilement et à la position de pose.

9. Procédé selon la revendication 8,
**caractérisé en ce que** l'unité de commande règle un dispositif de levage sous les articles, grâce à quoi les articles sont amenés vers la position de désempilement quand les couches d'articles sont désempilées.

10. Procédé selon la revendication 8 ou 9,
**caractérisé en ce que** l'unité de commande règle un dispositif, grâce à quoi la bande transporteuse et éventuellement d'autres bandes transporteuses sont amenées vers la position de désempilement en relation aux articles.

11. Procédé selon une ou plusieurs des revendications précédentes 7 à 10,
**caractérisé en ce que** des postes d'agencement de palettes sont prévus, par exemple sous la forme de tables de levage, systématiquement autour d'une autre bande transporteuse, de sorte que l'agencement de désempilement/pose peut successivement être amené vers une position où il peut arbitrairement désempiler/empiler des articles à partir d'une palette éventuelle par déplacement de l'agencement de désempilement/pose perpendiculairement à l'autre bande transporteuse.
